# EUROPEAN PATENT SPECIFICATION

(11) **EP 2 610 879 B1**
(45) Date of publication and mention of the grant of the patent: **21.12.2016**
(21) Application number: 11819777.1
(22) Date of filing: 08.08.2011
(51) Int. Cl.: H01B 7/02, H01B 7/08, H01B 7/295, H01B 17/56

(54) **FLAT CABLE COVERING AND FLAT CABLE USING SAME**
FLACHKABELABDECKUNG UND FLACHKABEL DAMIT
ENVELOPPE DE CÂBLE PLAT, ET CÂBLE PLAT L'UTILISANT

(30) Priority: 23.08.2010 JP 2010186414
(43) Date of publication of application: 03.07.2013
(73) Proprietor: Dai Nippon Printing Co., Ltd., Tokyo 162-8001 (JP)
(72) Inventor: ARAI Masatoshi, Tokyo 162-8001 (JP)
(74) Representative: Hoffmann Eitle
(86) International application number: PCT/JP2011/068046
(87) International publication number: WO 2012/026313

(56) References cited:
- EP-A1- 1 883 081
- EP-A1- 2 471 871
- JP-A- 8 073 720
- JP-A- 9 221 642
- JP-A- 10 149 725
- JP-A- 2001 199 025
- JP-A- 2001 222 920
- JP-A- 2003 086 029
- JP-A- 2004 115 612
- JP-A- 2004 224 930
- JP-A- 2004 238 608
- JP-A- 2005 005 123
- JP-A- 2007 012 349
- JP-A- 2010 509 485
- US-A1- 2006 127 645
- DATABASE WPI Week 200328 Thomson Scientific, London, GB; AN 2003-282554 XP002750396, & JP 2002 367458 A (DAINIPPON PRINTING CO LTD) 20 December 2002 (2002-12-20)

## Description

### Technical Field

The present invention relates to a flat cable covering. More particularly, the present invention relates to a flat cable covering that excels in flame retardance, heat resistance, durability, blocking resistance, processability and the like without incorporating halogen-based flame retardants and antimony-based flame retarding assistants,

### Back Ground Art

Flat cables have hitherto been used in electronic equipments such as computers, liquid crystal display devices, cellular phones, printers, automobiles, car navigation systems, home electric appliances, copying machines and the like, for electric connections between electronic components and various types of wiring. Flat cables are guided in an interior of a narrow housing of electronic equipment. They are used under such an environment that, when electronic components are moved, they are slid, and, further, the temperature of a service environment is high due to heat generation from the electronic components. Accordingly, flexibility to sliding, resistance to high temperatures, and flame retardance are required of flat cable coverings that cover the flat cables. What is further required of flat cable coverings is to not contain components that contribute to environmental destruction when they are disposed of.

Japanese Patent Application Laid-Open No. 60108/1996 (patent document 1) proposes non-halogen-based flame retarding flat cables manufactured using a flat cable covering having an adhesive layer, the adhesive layer including a polyimide-based film and a phosphorus-modified saturated polyester polymer. Further, Japanese Patent Application Laid-Open No. 221642/1997 (patent document 2) and Japanese Patent Application Laid-Open No. 279101/1997 (patent document 3) disclose non-halogen-based flame retarding flat cables manufactured using a flat cable covering having a pressure-sensitive adhesive layer, the pressure-sensitive adhesive layer including a thermoplastic polyester-based resin and a phosphorus-based flame retardant. Further, Japanese Patent Application Laid-Open No. 89736/2001 (patent document 4) discloses a covering including a non-halogen-based flame retarding heat-sensitive adhesive, the adhesive including a polyester-based resin, a polyphosphoric acid-based flame retardant, and a non-polyphosphoric acid-based nitrogen-containing organic flame retardant.

EP 2 471 871 A1 relates to a flame-retardant resin composition that contains a thermoplastic resin, a polyfunctional monomer, and an organic phosphorus-based flame retardant. The thermoplastic resin contains 5% by mass or more of a resin having a carbon-carbon unsaturated bond or a resin having a carbonyl group relative to the entire thermoplastic resin. The organic phosphorus-based flame retardant is at least one selected from the group consisting of a metal phosphinate, a melamine phosphate compound, an ammonium phosphate compound, and a polyphosphazene compound obtained by ring-opening polymerization of cyclophosphazene. The content of the organic phosphorus-based flame retardant is 5 to 100 parts by mass relative to 100 parts by mass of the thermoplastic resin and the content of the polyfunctional monomer is 1 to 20 parts by mass relative to 100 parts by mass of the thermoplastic resin.

US 2006/127645 A1 relates to a flat-cable-coating material that includes a base film, and a heat-bonding layer (P+V) laminated to the base film and containing at least a filler (P) and a thermoplastic resin (V). The mass ratio (P)/(P+V) changes in a direction along the thickness of the heat-bonding layer in an inclined distribution curve preferably so as to decrease from the inner surface of the heat-bonding layer on the side of the base film toward the outer surface of the heat-bonding layer from 90% by mass and to 50% by mass. The filler (P) includes at least a hydrated metal compound (P1) and the mass ratio (P1/P) of the mass of the hydrated metal compound (P1) to the mass of the filler (P) changes in a direction along the thickness of the heat-bonding layer in a distribution curve so that the mass ratio (P1/P) decreases from the inner surface of the heat-bonding layer on the side of the base film toward the outer surface of the heat-bonding layer from 80% by mass to 0% by mass.

EP 1883 081 A1 relates to insulated wires for use in electronic equipment, comprising an electrically conductive core and an insulating layer and/or an insulating jacket consisting of a flame retardant thermoplastic composition surrounding the electrically conductive core, wherein the flame retardant thermoplastic composition comprises (A) a thermoplastic polymer comprising a copolyester elastomer and/or a copolyamide elastomer, (B) a metal salt of a phosphinic acid of the formula [R¹R²p(O)O]⁻ₘ M^{m+} (formula I) and/or a diphosphinic acid of the formula [O(O)PR¹-R³-PR² (O)O]²⁻ₙMₓ^{m+} (formula II), and /or a polymer thereof, wherein R¹ and R² are equal or different substituents chosen from the group consisting H, linear, branched and cyclic C1-C6 aliphatic groups, and aromatic groups, R³ and is chosen from the group linear, branched and cyclic C1-C10 aliphatic groups and C6-C10 aromatic and aliphatic-aromatic groups, M is a metal chosen from the group consisting of Mg, Ca, Al, Sb, Sn, Ge, Ti, Zn, Fe, Zr, Ce, Bi, Sr, Mn, Li, Na, and K, and m, n and x are equal or different integers in the range of 1-4, (C) a flame retardant component consisting of a nitrogen containing flame retardant synergist and/or a phosphor/nitrogen containing flame retardant, and (D) an inorganic compound chosen from the group consisting of basic and amphoteric oxides, hydroxides, carbonates, silicates, borates, stannates, mixed oxide-hydroxides, oxide-hydroxide-carbonates, hydroxide-silicates and hydroxide-borates, and mixtures thereof.

JP 2002-367458 A relates to a flat cable covering material and a flat cable using it. The flat cable covering material is structured, so that a primer layer and a hot adhesion layer consisting of a heat seal type synthetic resin are successively laminated on one surface of a base film, where the base film contains a phosphorus series fire retardant, while the hot adhesion layer contains a hydrated metal compound and/or a nitrogen series fire retardant. The flat cable is formed using the covering material.

JP 2001-222920 A relates to a heat sealed tape that consists of a film-like base material, anchor coat layer, and heat sealed layer, each laminated in sequence. The heat sealed layer consists of a coating made of at least resin compound containing a filler component containing a flame retardant as the main component and a resin component containing polyester resin as the main component. The resin component containing the polyester resin as the main component consists of at least 5 to 35 wt.% of polyester resin having a glass transition point of -50 to 10 °C, 5 to 35 wt.% of polyester resin having a glass transition point of 20 to 45 °C, and 0.5 to 5 wt.% of polyester resin having a glass transition point of 70 to 120 °C, as the main components.

JP 08-073720 A relates topolyester moulding materials containing a phosphinic acid salt of formula (I) and/or a diphosphinic acid salt of formula (II): R¹, R² =1-6C linear or branched alkyl, or Ph; R³ = 1-10C alkylene, arylene, alkarylene or aralkylene; M = Ca or Al ion; m = 2 or 3; n = 1 or 3; x = 1 or 2.

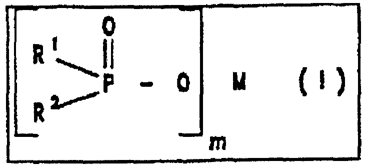

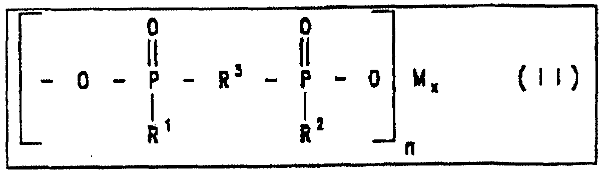

JP 2010-509485A relates to a flame retardant thermoplastic elastomer composition comprising a thermoplastic vulcanizate composition and non-halogenated flame retardant.

### Prior Art Documents

### Patent Documents

Patent document 1: Japanese Patent Application Laid-Open No. 60108/1996
Patent document 2: Japanese Patent Application Laid-Open No. 221642/1997
Patent document 3: Japanese Patent Application Laid-Open No. 279101/1997
Patent document 4: Japanese Patent Application Laid-Open No. 89736/2001

### [DISCLOSURE OF THE INVENTION]

### Problems to be Solved by the Invention

All the above flat cables use a polyester-based film or a polyimide-based film as a base film. The polyester-based film, when used solely, disadvantageously provides flat cable coverings that lack in flame retardance, and polyimide-based films are disadvantageously expensive. Flat cable coverings including an adhesive layer (a pressure-sensitive adhesive layer) containing an antimony-based flame retardant has a drawback that there is a possibility that, when flat cables using flat cable coverings are disposed of after use with electronics, the flame retardant is leaked into environment due to some factors or is incorporated in human body, leading to health risks.

There is a recent tendency towards the regulation of use of harmful substances from the viewpoint of protecting environment on a global level. Also for materials to be used in flat cables, use of harmful substances should be minimized. For example, decabromodiphenyl ether (DBDPO) that is a halogen-based flame retardant has a possibility of producing dioxin-related substances under some combustion conditions, and, thus, the regulation of use thereof is desired. Further, antimony trioxide that is a flame retarding assistant is irritant to skin and mucosa and is designated as a deleterious substance.

The present inventors have now aimed at flame retardance of metal salts of phosphinic acid that are phosphorus-based flame retardants and have found that a flat cable covering that possesses superior flame retardance, heat resistance, durability, blocking resistance, processability and other properties and, at the same time, is eco-friendly without use of halogen-based flame retardants and antimony-based flame retarding assistants can be realized by incorporating a polyeser-based resin and a metal salt of phosphinic acid at a predetermined ratio. The present invention has been made base on such finding.

Accordingly, an object of the present invention is to provide a flat cable covering that possesses superior flame retardance, heat resistance, durability, blocking resistance, processability and other properties and, at the same time, is eco-friendly without use of halogen-based flame retardants and antimony-based flame retarding assistants.

### Means for Solving the Problems

According to the present invention, there is provided a flat cable covering comprising: a base film; and an anchor coat layer and a heat seal layer stacked in that order on the base film, wherein
the heat seal layer comprises a resin composition comprising at least 70 to 30% by weight of a filler component composed mainly of a flame retardant and 30 to 70% by weight of a resin component composed mainly of a polyester-based resin, and the filler component further comprises a hydrated metal compound as flame retarding assistant.
the flame retardant is a non-halogen-based flame retardant comprising a metal salt of phosphinic acid and contained in an amount of 5 to 40% by weight based on the whole resin composition,

In a preferred embodiment of the present invention, the metal salt of phosphinic acid is aluminum phosphinate.

In a preferred embodiment of the present invention, the polyester-based resin comprises 80 to 99% by weight, based on the total weight of the resin component, of a first polyester-based resin component having a glass transition point of -20°C to 30°C and 1 to 20% by weight, based on the total weight of the resin component, of a second polyester-based resin component having a glass transition point of 30°C to 120°C.

In a preferred embodiment of the present invention, the polyester-based resin contains less than 5% by weight, based on the total weight of the resin component, of a polyester polymer plasticizer having a mean molecular weight of 2500 to 10000.

In a preferred embodiment of the present invention, the polyester-based resin contains less than 5% by weight, based on the total weight of the resin component, of a polyfunctional compound containing one or more functional groups selected from the group consisting of isocyanate, blocked isocyanates, and carbodiimide groups.

In a preferred embodiment of the present invention, the base film is selected from the group consisting of polyethylene terephthalate, polyethylene naphthalate, polybutylene terephthelate, polyamide, polyphenylene sulfide, polyaramide, and polyimide-based films,

in a preferred embodiment of the present invention, the anchor coat layer is a film formed of an anchor coating agent comprising a functional compound, a polyester-based resin, and a polyurethane-based resin.

According to another aspect of the present invention, there is provided a flat cable comprising: conductor arrays formed of a plurality of conductors arranged on an identical plane; and a pair of coverings that hold the conductor arrays therebetween, wherein
the covering is a flat cable covering according to any one of claims 1 to 7, and the conductor arrays are held between a pair of flat cable coverings so that the heat seal layers in the respective flat cable coverings face each other.

### Effect of the Invention

According to the present invention, a flat cable covering that possesses superior flame retardance, heat resistance, durability, blocking resistance, processability and other properties and, at the same time, is eco-friendly without use of halogen-based flame retardants and antimony-based flame retarding assistants can be realized by aiming at flame retardance of a metal salt of phosphinic acid that is a phosphorus-based flame retardant, and incorporating a polyester-based resin and a metal salt of phosphinic acid at a predetermined ratio.

### [BRIEF DESCRIPTION OF DRAWINGS]

Fig. 1 is a typical cross-sectional view showing a layer construction of one embodiment of a flat cable covering according to the present invention.,
Fig. 2 is a typical schematic view showing a construction of one embodiment of a flat cable including a flat cable covering according to the present invention.
Fig. 3 is a cross-sectional view taken on line A-A of Fig. 2.

### [BEST MODE FOR CARRYING OUT THE INVENTION]

### <Flat cable covering>

The flat cable covering according to the present invention has a layer construction including: a base film; and an anchor coat layer and a heat seal layer stacked in that order on the base film. The flat cable covering according to the present invention will be described with reference to the accompanying drawings.

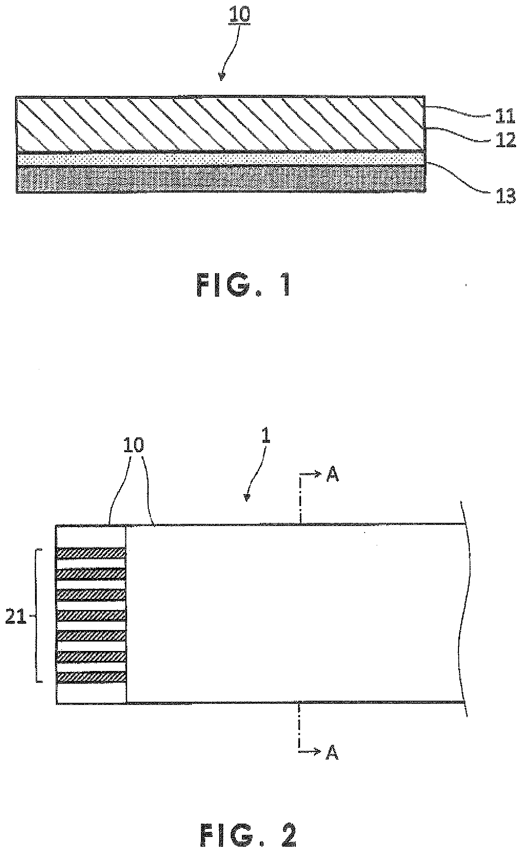

Fig. 1 is a typical cross-sectional view showing a layer construction of one embodiment of a flat cable covering according to the present invention. As shown in Fig. 1, a flat cable covering 10 according to the present invention includes a base film 11, an anchor coat layer 12 provided on the base film 11, and a heat seal layer 13 provided on the anchor coat layer 12.

Any film-shaped material that excels In mechanical strength and possesses good heat resistance, chemical resistance, solvent resistance, flexibility, insulating properties and other properties may be used as the base film 11 without particular limitation. Examples thereof include films of polyesters such as polyethylene terephthalate, polyethylene naphthalate, and polybutylene terephthalate, polyamides such as nylon 6, nylon 66, and nylon 610, polyimides such as polyimide, polyamide-imide, and polyether-imide, fluoro resins, polyether sulfone, polyether ketone, polyether sulfide, polyallylate, polyester ether, wholly aromatic polyamide, polyaramid, polypropylene, and polycarbonate. Usually polyalkylene terephthalates such as polyethylene terephthalate and polyethylene naphthalate are suitable.

Any of unstretched or stretched films may be used as the base film, Stretched film are preferred from the viewpoint of improving the strength of the flat cable covering. Uniaxially or biaxially stretched films, particularly biaxially stretched films, are suitable.

The surface of the base film may have if necessary been subjected to corona treatment, plasma treatment, ozone treatment, or other pretreatment. The thickness of the base film is generally approximately 5 µm to 200 µm, and a thickness of 10 µm to 100 µm is suitable. When the thickness of the base film is less than 5 µm, the mechanical strength is unsatisfactory and, further, suitability for the formation of a primer layer or a heat seal layer that will be described later is lowered. On the other hand, when the thickness of the base film is not less than 200 µm, the flexibility is unsatisfactory and the slidability is lowered. In the present invention, when the thickness of the base film is in the above-defined range, necessary strength can be imparted to the flat cable covering and, at the same time, good flexibility can be imparted.

The anchor coat layer 12 provided on the base film 11 functions to firmly bond a heat seal layer 13 which will be described later to the base film 11 and to thereby obtain an advantage that, in use, the flat cable can withstand sliding against electronic equipment and can suppress interlayer peeling and the like, and, thus, insulating properties and durability can be improved. The anchor coat layer 12 can be provided by coating an anchor coating agent which will be described later on a base film 11. An example of a suitable anchor coating agents usable herein is one containing a polyfunctional compound (curing agent) containing a functional group such as an isocyanate, blocked isocyanate, or carbodiimide group, a polyester-based resin, and a polyurethane-based resin. A polyester-based resin having a glass transition point of 20°C to 120°C, preferably 30°C to 100°C, is suitable as the polyester-based resin.

For example, thermoplastic polyester-based resins produced by polycondensing one or a plurality of aromatic saturated dicarboxylic acids such as terephthalic acid with one or a plurality of saturated dihydric alcohols are suitable as the polyester-based resin having a glass transition point of 20°C to 120°C, preferably 30°C to 100°C, For example, polyurethane-based resins produced by a reaction of polyfunctional isocyanates with hydroxyl group-containing compounds are suitable as the polyurethane-based resin.

Polyfunctional compounds container in the anchor coating agent (curing agent) are preferably compounds containing an isocyanate group, a blocked isocyanate group and/or a carbodiimide group. Examples thereof include polyfunctional isocyanates such as 2,4-tolylenediisocyanate, 2,6-tolylenediisocyanate, diphenylmethane-4,4'-diisocyanate, xylenediisocyanate, isophoronediisocyanate, polymethylenepolyphenyldiisocyanate, and hexamethylenediisocyanate, polyol-modified products of these isocyanates, carbodiimide-modified products of these isocyanates, and blocked isocyanates obtained by masking these isocyanates with alcohol, phenol, lactam, amine or the like,

An anchor coating agent composed mainly of a polyethylene imine-based compound, an organotitanium-based compound, an isocyanate-based compound, a urethane-based compound, a polybutadiene-based compound or the like may be used in combination with the above anchor coating agent.

Preferably, the mixing ratio between the polyester-based resin and the polyurethane-based resin contained in the anchor coating agent is approximately 0.7 : 0.3 to 0.3 : 0.7 in terms of the ratio of the polyester-based resin to the polyurethane-based resin. Preferably, the addition amount in terms of the reactive group of the polyfunctional compound (curing agent) is 1 to 10 times larger than the amount in terms of the reactive group of the polyester and polyurethane-based resin. The anchor coating agent coated on the base film is used as a liquid obtained by diluting the anchor coating agent with an organic solvent so that each of the ingredients is contained in an amount of 2 to 60% by weight in terms of solid content.

The anchor coat layer may be formed by coating the diluted liquid of the anchor coating agent onto the surface of the base film to form a coating film and drying the coating film to remove the diluent. The diluted liquid of the anchor coating agent may be coated by roll coating, reverse roll coating, gravure coating, reverse gravure coating, bar coating, rod coating, kiss coating, knife coating, die coating, comma coating, flow coating, spray coating, or other coating method The diluent Is removed by aging the coating film at a temperature of 30°C to 70°C, The thickness of the anchor coating layer 12 is generally approximately 0.05 µm to 10 µm, preferably approximately 0.1 µm to 5 µm,

The heat seal layer 13 is provided on the anchor coating layer 12 and should have good flexibility and, at the same time, should heat-seal the anchor coat layer 12 and a conductor 21 which will be described later. The heat seal layer 13 should meet the requirements that, in holding a conductor 21 formed of a metal or the like between a pair of flat cable coverings, the conductor 21 can be tentatively fixed on the heat seal layer 13, the heat seal layer 13 has an adhesion to the conductor 21 of such a high level that, when the heat seal layer 13 can be softened and melted by heat-pressing, for example, with a heating roll or a heating plate to provide firm heat fusing of the heat seal layer 13 to the conductor 21, and, at the same time, after heat fusing between the heat seal layers 13 in the flat cable coverings, the conductor 21 Is embedded in the heat seal layers without producing voids.

In the present invention, the heat seal layer 13 is formed of a film formed using a resin composition including 70 to 30% by weight of a filler component composed mainly of a flame retardant and 30 to 70% by weight of a resin component composed mainly of a polyester-based resin. When the amount of the filler component is larger, the flame retardance is better. When the amount of the filler component is more than 70% by weight, however, a film cannot be formed in the formation of the heat seal layer 13 and, further, necessary bonding properties cannot be obtained. On the other hand, when the amount of the filter component is less than 30% by weight, the flame retardance is unsatisfactory and, at the same time, the heat resistance of the flat cable covering is unsatisfactory.

In the present invention, the filler component contains a non-halogen-based flame retardant formed of a metal salt of phosphinic acid, and the non-halogen-based flame retardant formed of the metal salt of phosphinic acid is contained in an amount of 5 to 40% by weight based on the whole resin composition. When the amount of the flame retardant component is larger, the flame retardance is better. When the amount of the flame retardant component is above the upper limit of the above-defined range, the amount of the synthetic resin component is reduced and a film cannot be formed in the formation of the heat seal layer 13 and, further, necessary bonding properties cannot be obtained. On the other hand, when the amount of the flame retardant component is below the lower limit of the above-defined range, the flame retarding effect is small and, thus, the heat seal layer, when ignited, is burned out. An addition amount of the flame retardant of 5 to 40% by weight is suitable.

In the present invention, compounds having the following chemical structure are suitable as the non-halogen-based flame retardant formed of the metal salt of phosphinic acid. 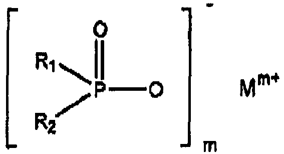 wherein R₁ and R₂ each independently represent a linear or branched C1 to C6 alkyl group or a phenyl group; M represents calcium, aluminum, or zinc ions; and m is 2 or 3.

Metal salts of phosphinic acid described in Japanese Patent 3044209 are suitable as the flame retardant. Among aluminum, calcium, and zinc salts, an aluminum salt is optimal from the view point of flame retardance.

The present inventors have found that a better effect can be exerted by using the above flame retardant in combination with a flame retarding assistant. Hydrated metal compounds may be used as the flame retarding assistant, and flame retarding assistants are used solely or in a combination of two or more of them. When the amount of the flame retarding assistant incorporated is excessively small, the effect of Improving the flame retardance cannot be obtained. On the other hand, when the amount of the flame retarding assistant incorporated is excessively large, the formability of the heat seal layer 13 is lowered. Accordingly, determining the type and combination, and mixing ratio of flame retarding assistants to be used in the heat seal layer 13 so as to obtain the contemplated results is very important.

Hydrated metal compounds usable as the flame retarding assistants include aluminum hydroxide, magnesium hydroxide, zirconium hydroxide, calcium hydroxide, titanium hydroxide, and zinc hydroxide. Aluminum hydroxide and magnesium hydroxide that excel in flame retardance and are also advantageous in cost are suitable. The hydrated metal compounds may be used solely or in a combination of two or more of them.

In the resin component in the heat seal layer, a polyester-based resin is contained as a main component from the viewpoints of the capability of heat-sealing the conductor 21 and easiness on mixing of the flame retardant. A suitable polyester-based resin includes a polyester-based resin as a main component that has a relatively low glass transition point of -20°C to 30°C and possesses good flexibility and a polyester-based resin as an additive that has a relatively high glass transition point of 30°C to 120°C and possesses good heat resistance. The combined use of the two polyester-based resins can provide a flat cable covering that is flexible and excels in heat resistance. Preferably, these two polyester-based resins are mixed at such a ratio that the polyester-based resin includes 80 to 99% by weight, based on the total weight of resin components, of a polyester-based resin component having a glass transition point of -20°C to 30°C and 1 to 20% by weight, based on the total weight of resin components, of a polyester-based resin component having a glass transition point of 30°C to 120°C. Further, a proper mixture of a noncrystalline polyester-based resin with a crystalline polyester-based resin may also be used.

in the present invention, in addition to the polyester-basted resins, other resins may be contained as the resin component in the heat seal layer, and examples of such other resins include ionomer resins, acid-modified polyolefin resins, ethylene-(meth)acrylic acid copolymers, ethylene-(meth)acrylic acid ester copolymers, polyamide-based resins, polyurethane-based resins, (meth)acrylic resins, polyvinyl ether resins, silicone resins, and rubber-based resins.

In the present invention, preferably, polyester polymeric plasticizers having a mean molecular weight of 2500 to 10000 are contained in an amount of less than 5% by weight based on the total weight of the resin component. The incorporation of such plasticizers contributes to an improvement, for example, in close contactness of the heat seal layer with and the adhesion of the heat seal layer to the conductor and in embedding of the conductor in the heat seal layer. When the plasticizer is contained in an amount of not less than 5% by weight, for example, deposition (bleeding-out) of part of the plasticizer on the surface of the heat seal layer occurs that is causative of sealing failure.

An example of the polyester polymeric plasticizer is a polyester plasticizer that is liquid at room temperature and is a combination of, for example, dicarboxylic acids such as adipic acid, azelaic acid, sebacic acid, and phthalic acid, dihydric or trihydric alcohols such as ethylene glycol, diethylene glycol, propylene glycol, dipropylene glycol, 1,3-butylene glycol, neopentyl glycol, and glycerin, and monobasic acids. More preferably, the polyester polymeric plasticizer has a mean molecular weight of approximately 2,500 to 10,000. In polyester plasticizers having a mean molecular weight of less than 2,500, for example, the contactness and adhesion can be maintained, but on the other hand, for example, problems of transfer and extraction of the plasticizer sometimes occur and, further, a problem of long-term durability (change with elapse of time) of the flat cable sometimes occur. On the other hand, in polyester plasticizers having a mean molecular weight of more than 10,000, functions inherent in the plasticizers are sometimes lost.

Further, in the present invention, curing agents formed of polyfunctional compounds described above may be added into the heat seal layer. The addition of the curing agent can provide a flat cable covering that has better adhesion and close contactness and, at the same time, has better mechanical strength. Preferably, the addition amount of the curing agent is less than 5% by weight based on the resin composition.

Further, various additives, for example, antioxidants, metal corrosion preventive agents, colorants (pigments and dyes), blocking preventive agents, various coupling agents that increase cohesive force between the resin and the flame retardant, crosslinking agents, crosslinking assistants, fillers, antistatic agents, and flame retarding catalysts may be properly added in the heat seal layer in such an amount that does not affect the effect of the present invention. Examples of such additives usable herein include powders of extender pigments or white pigments such as calcium carbonate, barium sulfate, magnesium carbonate, aluminum oxide, titanium oxide, and zinc oxide or other inorganic compounds, glass frits, fluororesin powders, polyolefin-based resin powders, and the like. For example, titanium oxide or zinc oxide has a smaller particle diameter than magnesium carbonate, aluminum oxide and the like, and, thus, advantageously, the function as a blocking preventive agent during storage of flat cable coverings in a roll form is also be exerted. Inorganic filler particles as described above have a size of approximately 0.01 µ to 15 µ as primary particles.

The heat seal layer may be formed by coating a resin composition containing the above components on the anchor coat layer and drying the coating firm. A resin composition of this type suitable herein is one prepared by kneading the above components, a solvent such as toluene, ethyl acetate, an alcohol, or methyl ethyl ketone, a diluent and the like to dissolve or disperse them in one another. The resin composition may be coated by roll coating, reverse roll coating, gravure coating, reverse gravure coating, bar coating, rod coating, kiss coating, knife coating, die coating, comma coating, flow coating, spray coating, or other coating methods.

The heat seat layer may be formed by coating the resin composition and drying the coating to form a film. The thickness of the heat seal layer 13 is approximately 15 to 150 µm (on a dry basis).

### <Flat cable>

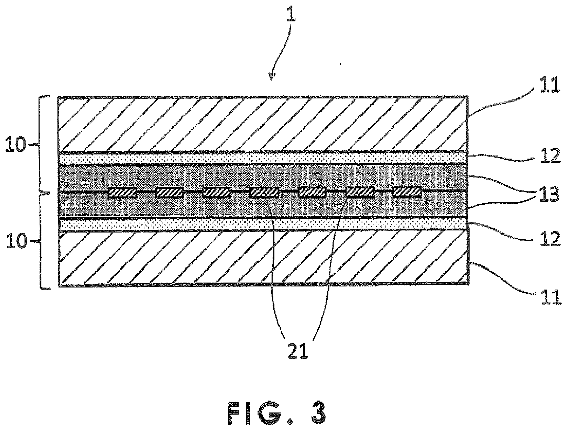

Fig. 2 is a typical schematic diagram showing the construction of one embodiment of a flat cable according to the present invention. Fig. 3 is a cross-sectional view taken on line A-A of Fig. 2. A flat cable 1 according to the present invention comprises: conductor arrays formed of a plurality of conductors 21 arranged on an identical plane; and a pair of flat cable coverings 10 that hold the conductor arrays therebetween, thereby covering the conductor arrays from both sides thereof. In the present invention, the above-described flat cable covering may be used as the flat cable covering 10.

The flat cable having the above structure may be manufactured by providing a pair of flat cable coverings 10, tentatively fixing conductor arrays formed of a plurality of conductors arranged on an identical plane on a heat seal layer in one of the coverings, superimposing the coverings on top of each other so that the heat seal layer with the conductor arrays tentatively fixed thereon faces the other heat seal layer, to form a laminate, and heating the laminate. The heating allows the heat seal layers to be heat-fused to each other and the conductor arrays to be embedded in between the heat-fused heat seal layers to integrate the conductor arrays with the heat-fused seal layer, thereby manufacturing a flat cable.

In heat-fusing the heat seal layers to each other, a method may be adopted in which the heat seal layers are pressed with heating. The heating temperature is approximately 100 to 300°C, preferably 150 to 250°C, The heating time is 1 to 240 min, preferably 10 to 60 min, The heating step may be carried out by superimposing the coverings on top of each other to form a laminate, once winding-up the laminate to form a roll, and heating the roll. Alternatively, a method may be adopted in which a continuous laminate is cut into sheets having a desired length and the sheets are then heated.

### [EXAMPLES]

The present invention is further illustrated by the following Examples.

### Example 1

### <Preparation of anchor coating agent>

A polyester-based resin having a glass transition point of 40°C and a polyol-based urethane resin (solid content weight ratio = 1 : 1, hydroxyl value = 10 mg KOH/g) were dissolved in a mixed solvent composed of methyl ethyl ketone and toluene (methyl ethyl ketone : toluene = 1 : 1) to prepare liquid A. Tolylene diisocyanate and hexamethylene diisocyanate were dissolved in a mixed solvent composed of methyl ethyl ketone and toluene (methyl ethyl ketone : toluene = 1 : 1) to prepare liquid B. The liquids A and B prepared above were mixed together immediately before coating on a base film to prepare an anchor coating agent (OH group : NCO group = 1 : 3).

### <Preparation of resin composition for heat seal layer formation>

A polyester-based resin (40% by weight) having a glass transition point of 5°C and 4.5% by weight of a polyester-based resin having a glass transition point of 70°C were provided as a resin component, 15% by weight of aluminum phosphinate powder microparticulated to a mean particle diameter of 2 to 3 µm and 40% by weight of other filler components (aluminum hydroxide, titanium oxide, and silica) were provided as the flame retardant component, and, further, 0.5% by weight of an isocyanate-based adduct was provided as a polyfunctional compound (a curing agent). They were dissolved and dispersed in a mixed solvent composed of methyl ethyl ketone and toluene (methyl ethyl ketone : toluene = 1 : 1) to prepare a resin composition for heat seal layer formation.

### <Preparation of flat cable covering>

A 25 µm-thick biaxially stretched polyethylene terephthalate film was provided as a base film. The anchor coating agent obtained above was gravure-coated to a layer thickness of 0.5 g/m² (on a dry basis) on a surface of the biaxially stretched polyethylene terephthalate film. The coating, was dried to form an anchor coat layer. The resin composition for heat seal layer formation prepared above was die-coated to a layer thickness of 30,0 g/m² (on a dry basis) on the anchor coat layer, and the coating was dried to form a heat seal layer. Thus, a flat cable covering according to the present invention was prepared.

### manufacture of flat cable>

The flat cable covering obtained above was provided. At the outset, two sheets of the flat cable covering (width 60 cm x length 100 cm) were superimposed on top of each other so that the surface of the heat seal layer in one of the flat cable coverings faced the surface of the heat seal layer in the other flat cable. A plurality of conductors having 0.8 mm in width × 50 µm in thickness were held at equal intervals between the heat seal layers to provide conductor arrays, thereby preparing a laminate. A flat cable was manufactured by passing the laminate through between a metal roll heated to 150°C and a rubber roll at a speed of 3 m/min to heat press the laminate, thereby heat-fusing the heat seal layers.

### Examples 2 to 8 and Comparative Examples 1 to 4

Fiat cable coverings were prepared in the same manner as in Example 1, except that, for resin compositions for heat seal layer formation, materials shown in Tables 1 and 2 below were used in respective amounts (% by weight) specified in the tables. Flat cables were manufactured in the same manner as in Example 1, except that the resin compositions prepared just above were used. When an attempt was made to prepare a flat cable covering using the resin composition for heat seal layer formation of Comparative Example 3, difficulties were encountered in forming the heat seal layer.

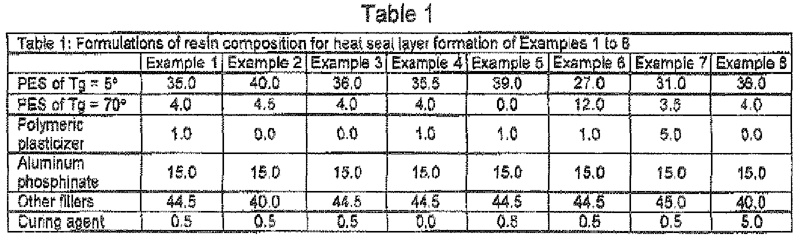

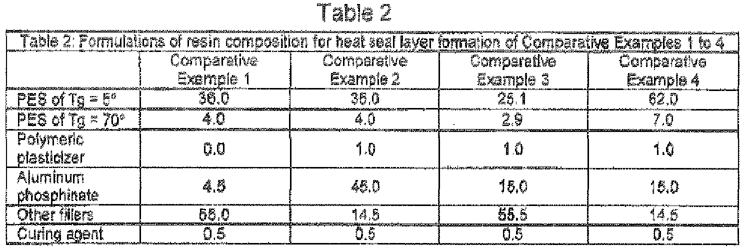

In Tables 1 and 2, Tg means a glass transition point, and PES means a polyester-based resin. A polyester plasticizer is used as the polymeric plasticizer, the amount of the other fillers is the total amount of aluminum hydroxide, titanium oxide, and silica, and an isocyanate-based adduct was used as the polyfunctional compound (curing agent).

For the flat cable coverings and flat cables of Examples 1 to 8 and Comparative Examples 1 to 4, the following items were tested and evaluated. For the flat cable covering of Comparative Example 3, as described above, the formation of the heat seal layer was so difficult that the following items cannot be evaluated.

### (1) Flame retardance

The flame retardance of flat cable 1 was evaluated by UL Standards VW-1 Flame test. When the flame retardance was on an acceptable level, the sample was evaluated as "⊚"; and when the flame retardance was on an unacceptable level, the sample was evaluated as "×,"

### (2) Conductor sealing property

A flat cable covering 10 was bonded to a 100 µm-thick copper foil with a heat sealer (temperature 170°C, pressure 3 kg/cm², time 3 sec) so that a heat seal layer 13 in the flat cable covering 10 faced the copper foil. The peel strength (N/10 mm-width) was then measured with a tensile tester. When the peel strength was 5 N or more and the sample was broken, the sample was evaluated as "⊚"; when the peel strength was 5 N or more and the heat seal layer 13 underwent cohesion peeling, the sample was evaluated as "o"; and, when the peel strength was 5 N or less, the sample was evaluated as "×,"

### (3) Heat resistance

For a heat resistance test, the sample was allowed to stand in an oven of 136°C for 168 hr. Before and after the heat resistance test, the tensile strength and elongation at break was measured. When the sample retained not less than 90% of the tensile strength and elongation at break as compared with the value before the heat resistance test, the sample was evaluated as "⊚"; when the sample retained not less than 80% of the tensile strength and elongation at break, the sample was evaluated as "o"; and, when the tensile strength and elongation at break was lowered to not more than 80%, the sample was evaluated as "×."

### (4) Conductor embedding property

The flat cable 1 was cut in a width-wise direction and parallel with a cutter, and the cross section was observed under an optical microscope. Whether there is a portion where air bubbles are present around the conductor and the embedding of the conductor is unsatisfactory was evaluated, and the sample was evaluated based on the results. When the conductor was completely embedded, the sample was evaluated as "⊚"; when an unembedded portion was observed by less than 50 µm around the conductor, the sample was evaluated "o"; and when an unembedded portion was observed by not less than 50 µm around the conductor, the sample was evaluated "×."

The evaluation results were as shown in Tables 3 and 4.

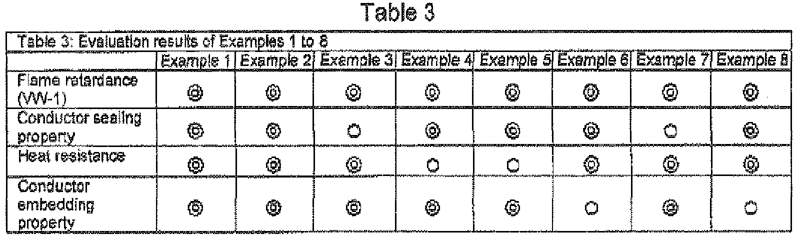

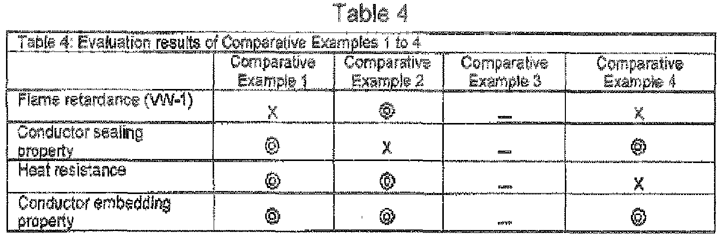

As is apparent from Table 3, for Example 1, all the evaluation results for the items were good. For Example 2 where the polymeric plasticizer was not added, good evaluation results could be obtained for all the items by increasing the amount of the polyester-based resin added. For Example 3 where the plasticizer was not added as in Example 2 and, unlike Example 2, the amount of the polyester-based resin was not increased, the seal strength was not less than 5 N, but on the other hand, the heat seal layer 13 underwent cohesion peeling. For Example 4 where the polyfunctional compound (curing agent) was not added, the heat resistance level was somewhat lowered. For Example 5 where the polyester-based resin having high Tg was not added, the heat resistance was inferior to that for Example 1. For Example 6 where the amount of the polyester-based resin having high Tg added is excessively high, the film had a hardness larger than that for Example 1 and, consequently, embedding of the conductors was unsatisfactory. For Example 7 where the amount of the plasticizer added was much larger than that in Example 1, part of the plasticizer was bled out on the surface and the sealability was unsatisfactory. For Example 8 where the amount of the curing agent added was larger than that in Example 1, the heat seal layer was so hard that the capability of embedding the conductor was unsatisfactory.

On the other hand, for Comparative Example 1, as shown in Table 4 above, when the amount of the flame retardant added was excessively reduced, the flame retardance, was on an unacceptable level. For Comparative Example 2, when the amount of the flame retardant added was excessively large, seal inhibition occurred and, consequently, the seal strength was unacceptable. For Comparative Example 3 where the total content of the aluminum phosphinate as the filler component and the other filler components was more than 70% by weight, difficulties were encountered in film formation. For Comparative Example 4 where the total content of the filler components was less than 30% by weight, not only the flame retardance but also the heat resistance was unsatisfactory.

### Description of Reference Characters

- 1: flat cable
- 10: flat cable covering
- 11: base film
- 12: anchor coat layer
- 13: heat seal layer
- 21: conductor

## Claims

1. A flat cable covering comprising: a base film; and an anchor coat layer and a heat seal layer stacked in that order on the base film, wherein
the heat seal layer comprises a resin composition comprising at least 70 to 30% by weight of a filler component composed mainly of a flame retardant and 30 to 70% by weight of a resin component composed mainly of a polyester-based resin,
the flame retardant is a non-halogen-based flame retardant comprising a metal salt of phosphinic acid and is contained in an amount of 5 to 40% by weight based on the whole resin composition, and
the filler component further comprises a hydrated metal compound as flame retarding assistant.

2. The flat cable covering according to claim 1, wherein the metal salt of phosphinic acid is aluminum phosphinate.

3. The flat cable coverings according to claim 1 or 2, wherein the polyester-based resin comprises 80 to 99% by weight, based on the total weight of the resin component, of a first polyester-based resin component having a glass transition point of -20°C to 30°C and 1 to 20% by weight, based on the total weight of the resin component, of a second polyester-based resin component having a glass transition point of 30°C to 120°C.

4. The flat cable covering according to any one of claims 1 to 3, wherein the polyester-based resin contains less than 5% by weight, based on the total weight of the resin component, of a polyfunctional compound containing one or more functional groups selected from the group consisting of isocyanate, blocked isocyanate, and carbodiimide groups.

5. The flat cable covering according to any one of claims 1 to 4, wherein the base film is selected from the group consisting of polyethylene terephthalate, polyethylene naphthalate, polybutylene naphthalate, polyamide, polyphenylene sulfide, polyaramide, and polyimide-based films.

6. The flat cable covering according to claim 4 or 5, wherein the anchor coat layer is a film formed of an anchor coating agent comprising a functional compound, a polyester-based resin, and a polyurethane-based resin.

7. A flat cable comprising: conductor arrays formed of a plurality of conductors arranged on an identical plane; and a pair of coverings that hold the conductor arrays therebetween, wherein
the covering is a flat cable covering according to any one of claims 1 to 6, and the conductor arrays are held between a pair of flat cable coverings so that the heat seal layers In the respective flat cable coverings face each other.

## Patentansprüche

1. Flachkabelabdeckung, umfassend: einen Basisfilm; und eine Ankerbeschichtungsschicht und eine Wärmedichtungsschicht, die auf dem Basisfilm in dieser Reihenfolge übereinander gestapelt sind; wobei
die Wärmedichtungsschicht eine Harzzusammensetzung umfasst, die mindestens 70 bis 30 Gew.% einer Füllstoffkomponente, hauptsächlich zusammengesetzt aus einem Flammschutzmittel, und 30 bis 70 Gew.% einer Harzkomponente, hauptsächlich zusammengesetzt aus einem Polyester-basierten Harz, umfasst,
das Flammschutzmittel ein nicht-halogenbasiertes Flammschutzmittel ist, das ein Metallsalz der Phosphinsäure umfasst und in einer Menge von 5 bis 40 Gew.%, bezogen auf die gesamte Harzzusammensetzung, enthalten ist, und
die Füllstoffkomponente zusätzlich eine hydratisierte Metallverbindung als Flammschutzhilfsmittel (flame retardant assistant) umfasst.

2. Flachkabelabdeckung gemäß Anspruch 1, wobei das Metallsalz der Phosphinsäure Aluminiumphosphinat ist.

3. Flachkabelabdeckungen gemäß Anspruch 1 oder 2, wobei das Polyester-basierte Harz 80 bis 99 Gew.%, bezogen auf das Gesamtgewicht der Harzkomponente, einer ersten Polyester-basierten Harzkomponente mit einem Glasübergangspunkt von -20°C bis 30°C und 1 bis 20 Gew.%, bezogen auf das Gesamtgewicht der Harzkomponente, einer zweiten Polyester-basierten Harzkomponente mit einem Glasübergangspunkt von 30°C bis 120°C umfasst.

4. Flachkabelabdeckung gemäß einem der Ansprüche 1 bis 3, wobei das Polyester-basierte Harz weniger als 5 Gew.%, bezogen auf das Gesamtgewicht der Harzkomponente, einer polyfunktionalen Verbindung enthält, die eine oder mehrere funktionelle Gruppen, ausgewählt aus der Gruppe, bestehend aus Isocyanat-, blockierten Isocyanat- und Carbodiimidgruppen, enthält.

5. Flachkabelabdeckung gemäß einem der Ansprüche 1 bis 4, wobei der Basisfilm aus der Gruppe ausgewählt ist, die aus Polyethylenterephthalat-, Polyethylennaphthalat-, Polybutylennaphthalat-, Polyamid-, Polyphenylensulfid-, Polyaramid- und Polyimid-basierten Filmen besteht.

6. Flachkabelabdeckung gemäß Anspruch 4 oder 5, wobei die Ankerbeschichtungsschicht ein Film, gebildet aus einem Ankerbeschichtungsmittel, umfassend eine funktionelle Verbindung, ein Polyester-basiertes Harz und ein Polyurethan-basiertes Harz, ist.

7. Flachkabel, umfassend: Leiteranordnungen, die aus einer Mehrzahl von Leitern, die in einer identischen Ebene angeordnet sind, gebildet werden; und ein Paar Abdeckungen, die die Leiteranordnungen zwischen sich halten, wobei
die Abdeckung eine Flachkabelabdeckung gemäß einem der Ansprüche 1 bis 6 ist und die Leiteranordnungen so zwischen einem Paar Flachkabelabdeckungen gehalten werden, dass die Wärmedichtungsschichten der jeweiligen Flachkabelabdeckungen zueinander zeigen.

## Revendications

1. Gaine de câble plat comprenant : un film de base ; et une couche de revêtement d'ancrage et une couche thermoscellable empilées dans cet ordre sur le film de base, dans laquelle
la couche thermoscellable comprend une composition de résine comprenant au moins 70 à 30 % en poids d'un composant de charge se composant principalement d'un ignifuge et de 30 à 70 % en poids d'un composant de résine se composant principalement d'une résine à base de polyester,
l'ignifuge est un ignifuge non halogéné comprenant un sel métallique d'acide phosphinique et est présent en une quantité de 5 à 40 % en poids par rapport à la composition de résine totale, et
le composant de charge comprend en outre un composé métallique hydraté en tant qu'assistant ignifuge.

2. Gaine de câble plat selon la revendication 1, dans laquelle le sel métallique d'acide phosphinique est le phosphinate d'aluminium.

3. Gaine de câble plat selon la revendication 1 ou 2, dans laquelle la résine à base de polyester comprend de 80 à 99 % en poids, par rapport au poids total du composant de résine, d'un premier composant de résine à base de polyester ayant un point de transition vitreuse de -20 °C à 30 °C et de 1 à 20 % en poids, par rapport au poids total du composant de résine, d'un second composant de résine à base de polyester ayant un point de transition vitreuse de 30 °C à 120 °C.

4. Gaine de câble plat selon l'une quelconque des revendications 1 à 3, dans laquelle la résine à base de polyester contient moins de 5 % en poids, par rapport au poids total du composant de résine, d'un composé polyfonctionnel contenant un ou plusieurs groupes fonctionnels choisis dans le groupe constitué par des groupes isocyanate, isocyanate bloqués et carbodiimide.

5. Gaine de câble plat selon l'une quelconque des revendications 1 à 4, dans laquelle le film de base est choisi dans le groupe constitué par les films à base de téréphtalate de polyéthylène, naphtalate de polyéthylène, naphtalate de polybutylène, polyamide, sulfure de polyphénylène, polyaramide et polyimide.

6. Gaine de câble plat selon la revendication 4 ou 5, dans laquelle la couche de revêtement d'ancrage est un film se composant d'un agent de revêtement d'ancrage comprenant un composé fonctionnel, une résine à base de polyester et une résine à base de polyuréthane.

7. Câble plat comprenant : des réseaux de conducteurs se composant d'une pluralité de conducteurs agencés sur un plan identique ; et une paire de gaines qui maintiennent les réseaux de conducteurs entre elles, dans lequel
la gaine est une gaine de câble plat selon l'une quelconque des revendications 1 à 6, et les réseaux conducteurs sont maintenus entre une paire de gaines de câble plat de sorte que les couches thermoscellables dans les gaines de câble plat respectives se font face.
